Europäisches Patentamt

(19) European Patent Office

Office européen des brevets

(11) Publication number: **0 023 242**
**B1**

## (12) EUROPEAN PATENT SPECIFICATION

(45) Date of publication of patent specification: **07.09.83**

(51) Int. Cl.³: **B 29 D 23/12, F 16 L 9/16**

(21) Application number: **80101722.9**

(22) Date of filing: **13.10.78**

(60) Publication number of the earlier application in accordance with Art. 76 EPC: **0001894**

(54) **Profiled strips and method of forming tubular articles with these strips.**

(30) Priority: **18.10.77 AU 2100/77**
**15.02.78 AU 3384/78**

(43) Date of publication of application:
**04.02.81 Bulletin 81/5**

(45) Publication of the grant of the patent:
**07.09.83 Bulletin 83/36**

(84) Designated Contracting States:
**DE FR GB NL**

(56) References cited:
**AT - B - 304 965**
**DE - A - 2 613 386**
**DE - B - 1 778 201**
**US - A - 2 713 381**
**US - A - 3 606 670**
**US - A - 3 679 531**
**US - A - 3 811 478**
**US - A - 3 938 558**

(73) Proprietor: **RIB LOC HONG KONG LIMITED**
**1501 Hutchison House**
**Hong Kong (HK)**

(72) Inventor: **Menzel, Julian Maxwell**
**10 Kellet Street**
**Semaphore Park South Australia (AU)**

(74) Representative: **Opperman, Stuart Richard et al,**
**Haseltine Lake & Co. Hazlitt House 28**
**Southampton Buildings Chancery Lane**
**London WC2A 1AT (GB)**

Courier Press, Leamington Spa, England.

Profiled strips and method of forming tubular articles with these strips

The invention relates to the formation and strengthening of tubular objects such as pipes.

Description of the prior art

It is known to use plastic pipes for conveying water and other fluids which when buried, particularly in large diameters, have by necessity, because of earth loading or pressure test requirements, needed to have wall thicknesses of substantial dimensions thus making such pipes expensive.

Another problem with tubular objects is the bulk they present during transport and it has been proposed heretofore to form such tubular objects from strip and to wind the strip helically and to join the contiguous edges to form the tubular object, such a system being described in the specification of United States Letters Patent No. 3 938 558 which deals with a longitudinally corrugated metal strip which has edges which can be contiguously joined.

It is also known to form a flexible hose from strip which has shaped longitudinal edges so arranged that when the strip is helically wound the one edge engages in the configuration of the other edge to seal the hose and form a flexible member which has an upstanding helical configuration on it but the strip is of relatively narrow width.

A further known method is to use a strip of somewhat wider form, formed of a synthetic material which again has the longitudinal edges shaped so that the one edge can engage into a socket in the other edge when the edges are contiguously positioned, this being disclosed in the specification of United States Letters Patent No. 3 606 670. The specification also discloses a machine for rolling the strip to helical form and pressure joining the edges. Such a method is also disclosed in German patent specification No 1 778 201 in which the strip is profiled additionally to form a bead extending longitudinally of the strip between the shaped edges and in German patent specification No 2 613 366 in which a plastic strip constructed to be wound into a tube has rib projections on one face.

The purpose of forming the strip with ribs is to give strength to the resulting tube and of course the deeper the ribs the greater the tube strength. However as the depth of the ribs is increased so also is the risk of the edges of the ribs tearing as the strip is coiled into a tube.

The object of the present invention is to provide an improved form of strip which is of greater strength than the known forms and which avoids the need to have heavy sections and which can be used to form a tubular object such as a pipe or can be associated with a preformed pipe and can protect the pipe to stiffen the same.

A further object of the invention is to provide a strip which can be wound onto a plastic pipe and can protect the pipe and if necessary can substantially reinforce the pipe.

A still further object is to provide a strip which can be wound into the form of a pipe and which has a configuration such that there will be adequate strength in such a pipe because of a helical configuration of reinforcements used on the strip.

A still further object is to provide a compound pipe consisting of an inner core and a surround which is locked to the pipe to provide a channel construction around the pipe to increase the strength and rigidity of the pipe which can also be used for secondary purposes such as secondary conveyor channels as part of the pipe.

A still further object is to provide a form of strip which can be used in such a way that it forms a series of channels around the tubular object by using the strip in different ways and by, for instance, winding one strip on another as well as helically winding the two strips.

Summary of the invention

In accordance with the invention an elongated strip for forming articles by helically winding the said strip which has a series of upstanding ribs spaced apart across the width of the strip on at least one side thereof to form therebetween a series of open longitudinally extending side-by-side channels and connecting means on the said strip formed by a joining rib and a complementary engaging rib space apart transversely of the said strip and adapted to interengage and be connected together when one edge portion is placed over at least the other edge portion of the strip when helically winding the strip whereby to hold the said strip in its helical configuration is characterised in that at least some of the upstanding ribs each has a flange adjacent its free-end portion to strengthen the rib, each of said flanges being separated from the flange of any adjacent rib.

Brief description of the drawings

Figure 1 is an end elevation of a strip formed according to this invention,

Figure 2 is a somewhat enlarged view showing how the two edges of contiguous parts of the strip interengage when wound together in a helical manner,

Figure 3 is a perspective view of a tubular article manufactured from such a strip, the end of the article being shown partly unformed to clearly show the strip,

Figure 4 is a view corresponding to Figure 1 but showing how the strip can be reversed to provide a smooth outer surface and if required to be wound around an inner tube whereby to have a series of longitudinal channels on the strip which may be sealed to form secondary conduits,

Figure 5 is a perspective view corresponding to Figure 3 showing a pipe with such a helically wound strip thereon,

Figure 6 shows how added members can be used to lock together the joins between two edges of such a strip,

Figure 7 shows another form of edge using a reinforcing as well as a locking member,

Figure 8 shows how the form of the invention shown in Figures 1 to 3 can be filled in to further reinforce the strip,

Figure 9 shows a modified form of strip in which the ribs are relatively closely spaced and the strip itself is apertured between the ribs to provide a device which can for instance be used as a sand screen when such a strip is arranged in helical configuration,

Figure 10 shows a further embodiment of such a device,

Figure 11 shows a modified form of strip which is arranged to form a series of closed channels longitudinally when a series of these strips are joined and formed into the helical orientated tubular object,

Figure 12 is a somewhat enlarged fragmentary view showing how such a strip joins to form the closed channels, and

Figure 13 shows very schematically how a strip of the invention may be drawn off from a supporting reel and formed into a tubular article.

Description of the preferred embodiments

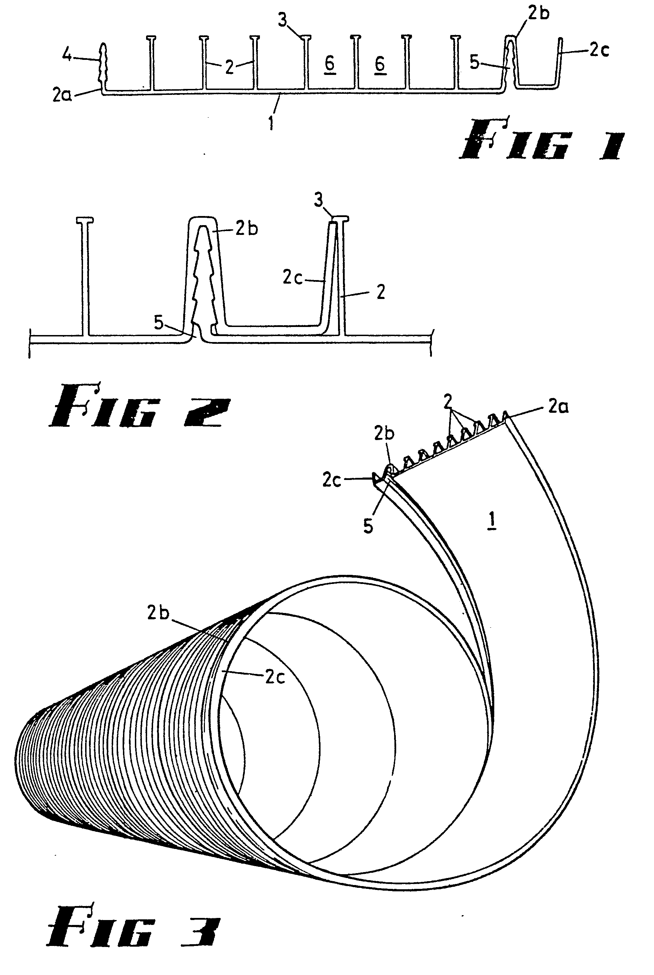

Referring first to Figures 1, 2 and 3, it will be seen that the strip 1 has on it a series of upstanding ribs 2 which ribs are strengthened at their outer ends by small flanges 3, the rib 2a at the one edge of the strip, referred to as a joining rib, having a series of barbs 4 on it, the rib 2b near the other edge of the strip, referred to as an engaging rib, being shaped to form a barbed socket 5 and arranged so that the rib 2a can engage the socket of the rib 2b, the strip having the rib 2b shaped so that it presses against an adjacent rib 2 when the two edges are joined as shown more particularly in Figure 2 where it will be noted that the edge of the rib 2c engages beneath the flange 3 on the rib 2. This forms a series of channels 6.

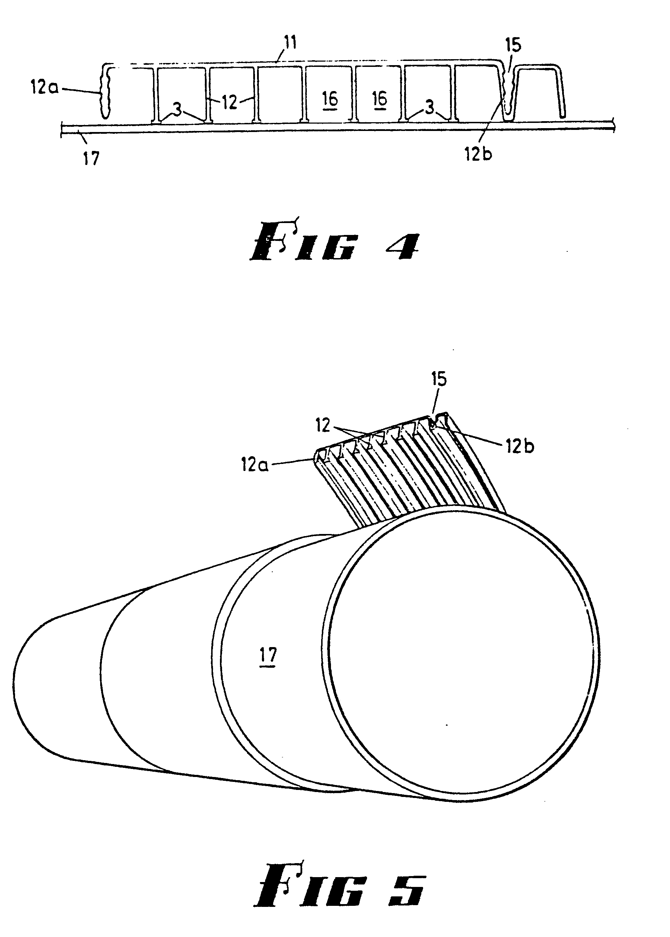

In Figure 3 is shown how a tubular object such as a pipe is formed when a strip is helically wound and the edges interengage by forcing the rib 2a into the socket 5 of the rib 2b.

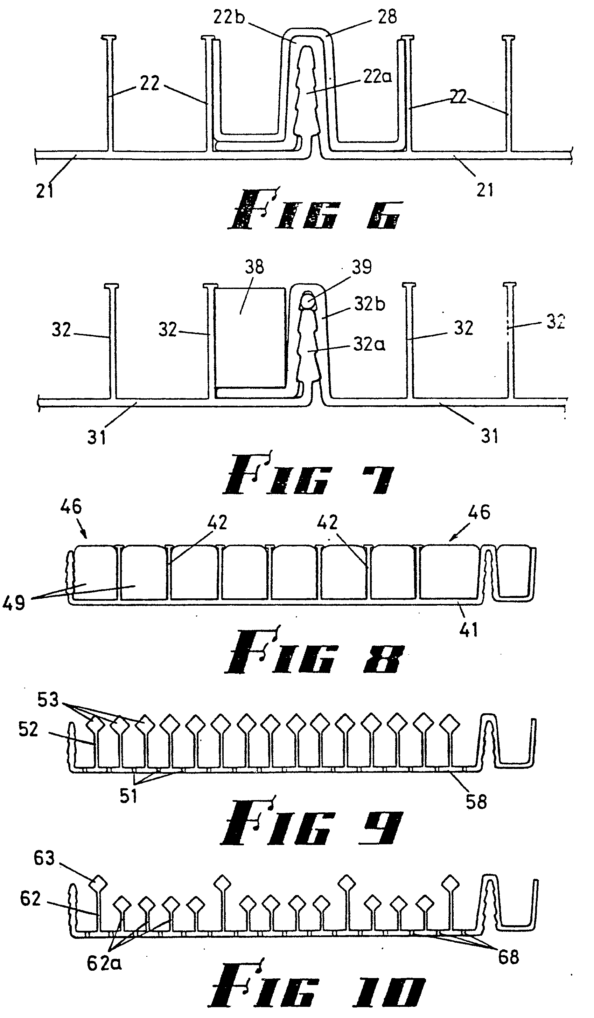

In Figures 4 and 5 is again shown a strip similar to that shown in Figure 1 but in this case the strip 11 has the ribs 12 inwardly positioned when the tubular object is formed by helically winding such a strip, the strip again having a barbed joining rib 12a at one end and a socket 15 in the engaging rib 12b but in Figure 4 this strip is shown wound onto a liner 17 which may be a pipe which is required to be reinforced, and when such a strip is tightly wound onto the liner 17 with the barbed rib 12a engaged in the socket 15 of the rib 12b a series of channels 16 result which can be sealed if required by cementing or otherwise joining the flanges 13 to the liner 17. It will be obvious however that the strip of Figure 1 can similarly be used in this inverted manner without winding it onto a liner, and whether the configuration of Figure 3 or Figure 5 is used depends on whether a smooth outside surface is required or whether the ribs are merely for the purpose of stiffening and protecting and particularly whether the secondary channels are required.

In Figure 6 is shown how a strip 21 can be helically wound with the ribs 22 again being upstanding from the body of the strip itself but the joint between the joining rib 22a and the engaging rib 22b which forms the socket is reinforced by placing over it an extrusion 28 which fits over the join between the two edges of the strip and further locks the assembly together, the extrusion preferably being made of rigid polyvinyl-chloride so that not only does it lock the joint but it also provides adequate reinforcing along the marginal edges of the strip.

In Figure 7 a similar configuration is shown with the strip 31 again having ribs 32 upstanding from it and including a barbed forming rib 32a as well as an engaging rib 32b with socket into which it fits but the edge of the strip in this case is held down by a foam packing 38 which helps to secure the lock, and also a wire 39 is shown which has the effect of providing reinforcing at the join.

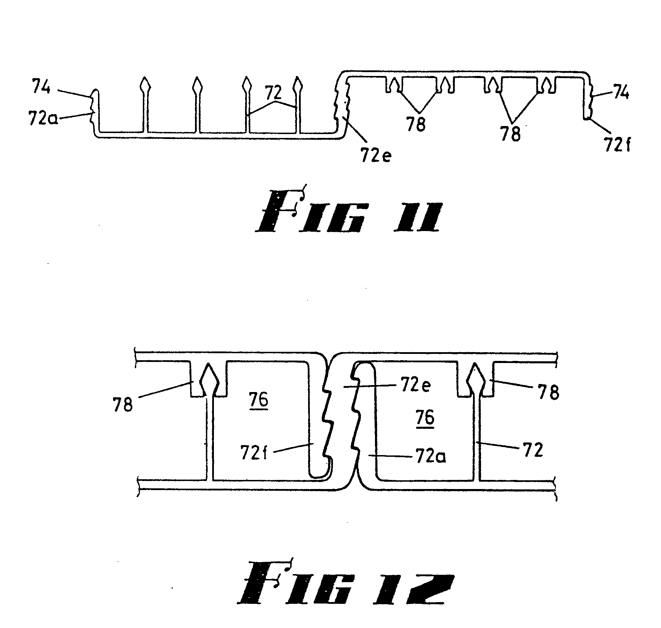

In Figure 8 a similar configuration is again used in that the strip 41 has upstanding ribs 42 but in this case the longitudinal channels 46 between the ribs are filled by a material such as concrete to form a helical filler 49. The concrete can be poured into the channels 46 and in that case the strip 41 forms a liner for the filler 49.

In Figure 9 the strip 51 again has ribs 52 but these are spaced closer together than in the previous embodiment and have shaped flanges 53 at the outer ends which form narrow openings between them, and the strip 51 itself is apertured at 58 between the ribs 51 and the device can then be used as a bore screen or the like where water is to permeate into the hollow of the screen but sand is prevented from entering the defined space.

Figure 10 shows a similar configuration to Figure 9 but in this case the strip 61 has larger ribs 62 at spaced intervals with smaller ribs 62a between the larger ribs 62 and here also the outside edges of the ribs 62 and 62d are provided with flanges 63 which can then form between them narrow slots so far as the smaller ribs 62a are concerned but the extending ribs 62 serve to prevent large materials from reaching and blocking the gaps between the ribs 62a, holes or slots 68 again being used through the strip to allow flow of liquid so that the device again acts as a bore screen or the like.

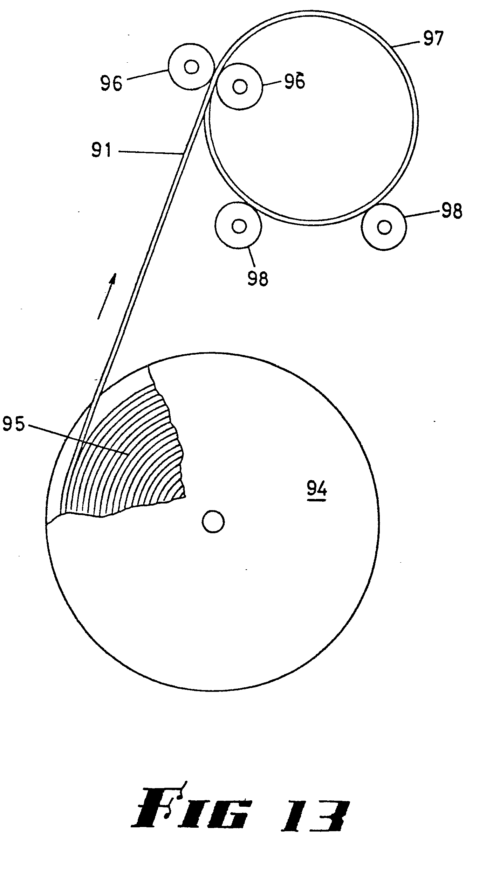

In the form shown in Figures 11 and 12 the strip 71 is shaped in such a manner that closed channels 76 are provided between the upstanding ribs 72, the strip 71 in this case extending from an outer joining rib 72a, which is provided on its outer face with barbs 74, to an intermediate rib 72e, which forms the engaging rib, which again has barbs 74, but on both faces, and the opposite end of the continued strip has a further, but downformed rib 72f on it with again barbs 74 at the outer face. One part of the strip has ribs 72 extending in the same direction as the rib 72a, but the other part of the strip has sockets 78 spaced similarly to the ribs 72 but downformed. Here no one part of such strip is placed on the other part of the strip but the ribs 72 of the one strip can engage the sockets 78 of the other as shown more particularly in Figure 12. It is to be noted that the two ribs 72a and 72f face in the opposite direction, and by displacing one strip half the width of the other strip during the helical winding a double walled structure results, the rib 72a of one part of the strip engaging the rib 72e of the other part of the strip.

The wound strip as generally described in this specification can have a further strip wound over it, preferably in the opposite direction for further reinforcement, or it can be sprayed or can otherwise have applied to it when formed into a tubular object a bonding material to lock the sections of the strip firmly together.

Figure 13 shows the strip 91 being fed from a reel 94, which contains a coil of strip 95, to between a pair of forming rollers 96 which force the joining rib into the socket of the engaging rib when the rollers 96 are driven to feed the strip 91 from the coil 95 onto itself at this point to form the tubular article 97, the article 97 resting on roller supports 98 which allow the article 97 to rotate as the further length of strip 91 from the coil 95 is joined onto it.

An elongated strip for forming articles by helically winding a strip which has a series of upstanding ribs spaced apart across the width of the strip and connecting means on the strip formed by a joining rib and a complementary engaging rib spaced apart transversely of the strip and adapted to interengage and be connected together when the strip is helically wound and in which the strip has an extension laterally outwards from the engaging rib to engage the adjacent rib lying inwardly of the joining rib when the strip is helically wound and the adjacent rib is provided with means for interlocking with the extension, forms the subject of Applicants' Patent No. 001894 (Application No. 78300502.8).

## Claims

1. An elongated strip for forming articles by helically winding the said strip which has a series of upstanding ribs (2) spaced apart across the width of the strip on at least one side thereof to form therebetween a series of open longitudinally extending side-by-side channels (6) and connecting means (2a, 2b) on the said strip formed by a joining rib (2a) and a complementary engaging rib (2b) spaced apart transversely of the said strip and adapted to interengage and be connected together when one edge portion is placed over at least the other edge portion of the strip when helically winding the strip whereby to hold the said strip in its helical configuration, characterised in that at least some of the upstanding ribs each has a flange (3) adjacent its free-end portion to strengthen the rib, each of said flanges (3) being separated from the flange of any adjacent rib.

2. An elongated strip according to claim 1 wherein the said joining rib is a barbed rib (4) on one side of the strip and the said engaging rib is on the same side of the strip and has a barbed socket (5) formed therein from the opposite side of the said strip.

3. An elongated strip according to claim 1 wherein the said strip has an extension laterally past the said engaging rib (72e) but displaced in plane by a distance approximately equal to the height of the upstanding ribs (72) of the said strip and has a series of longitudinal sockets (78) formed on such extension spaced and located to engage the flanges of the said upstanding ribs (72) when such a strip is wound helically.

4. An elongated strip according to claim 1 or 2 wherein the ribs (2) other than the joining and engaging ribs (2a, and 2b) are "T" shaped.

5. An elongated strip according to claim 1 or 2, wherein the said upstanding ribs (52) are relatively closely spaced and the flanges (53) form slits opening from the said channels formed between the ribs and apertures (58) extend through the said strip opening to the said channels.

6. An elongated strip according to claim 5 characterised by spaced upstanding ribs (63) upstanding further than the remaining upstanding ribs (62a).

7. An elongated strip according to claim 1 wherein the said strip has at one edge an upwardly directed barbed joining rib (72) and at the other edge a downformed barbed joining rib (72f) and at an intermediate part a further barbed engaging rib (72e), said intermediate rib (72e) joining a first part of the strip to a second part of the strip with the two parts displaced in plane by the said intermediate rib, a series of upstanding spaced ribs (72) on the said first part, and a series of downformed sockets (78) on the second part of the strip positioned to engage the flanges of said upstanding ribs (72) when the said strip is helically wound to position the said sockets (78) over the said ribs (72).

8. A method of forming an article by winding an elongated strip as claimed in any one of claims 1—4 into a helical form and joining said connecting means by interengaging or cementing said means to hold the strip in a helical configuration, wherein the channels between the said ribs are filled with a solid material (49) during or after helically winding the said strip.

9. A method of forming an article by winding an elongated strip as claimed in any one of claims 1—4 into a helical form and joining said connecting means by interengaging or cementing said means to hold the strip in a helical configuration, wherein the said strip is wound onto a tubular article (17) to reinforce said article.

10. A method of forming an article by winding an elongated strip as claimed in any of claims 1—4 into a helical form and joining said connecting means by interengaging or cementing said means to hold the strip in a helical configuration, wherein the said joining and engaging ribs are secured together by winding a reinforcing strip (28) over the said joining ribs.

11. A method of forming an article by winding an elongated strip as claimed in claim 2, 3 or 4 into a helical form and joining said connecting means by interengaging or cementing said means to hold the strip in a helical configuration, wherein a reinforcing wire (39) is positioned in the said barbed socket prior or during winding of the said strip into helical form.

12. A method of forming an article by winding an elongated strip as claimed in any one of claims 1—4 into a helical form and joining said connecting means by interengaging or cementing said means to hold the strip in a helical configuration, wherein a further strip is wound over the said strip with the helix being formed in the opposite direction whereby to reinforce the said strip.

**Patentansprüche**

1. Langgestrecktes Bandmaterial zum Formen von Gegenständen durch spiraliges Wickeln des Bandmaterials, das eine Reihe von abstehenden Rippen (2) auf mindestens einer Seite desselben aufweist, um dazwischen eine Reihe von offenen sich in der Längsrichtung erstreckenden nebeneinanderliegenden Kanälen (6) zu bilden, und Verbindungsmittel (2a, 2b) am Bandmaterial, die gebildet werden durch eine Verbindungsrippe (2a) und eine komplementäre Eingriffsrippe (2b) im Querabstand von dem Bandmaterial für den Eingriff und zur gegenseitigen Verbindung miteinander, wenn der eine Kantenteil zumindest über den anderen Kantenteil des Bandmaterials beim spiraligen Wickeln desselben gebracht wird, um dadurch das Bandmaterial in seiner spiraligen Gestalt zu halten, dadurch gekennzeichnet, daß mindestens einige der abstehenden Rippen je einen Flansch (3) benachbart ihrem freien Endteil aufweist, um die Rippe zu verstärken, wobei jeder der Flansche (3) vom Flansch einer benachbarten Rippe getrennt ist.

2. Langgestrecktes Bandmaterial nach Anspruch 1, dadurch gekennzeichnet, daß die Verbindungsrippe auf der einen Seite des Bandmaterials eine mit Widerhaken ausgebildete Rippe (4) ist und die Eingriffsrippe sich auf der gleichen Seite des Bandmaterials befindet und eine mit Widerhaken ausgebildete Hülse (5) hat, die an der entgegensetzten Seite des Bandmaterials geformt ist.

3. Langgestrecktes Bandmaterial nach Anspruch 1, dadurch gekennzeichnet, daß das Bandmaterial eine Erweiterung seitlich an der Eingriffsrippe (72e) hat, jedoch in der Ebene um einen Betrag versetzt ist, der annähernd gleich der Höhe der abstehenden Rippen (72) des Bandmaterials ist, und eine Reihe von Längshülsen (78) aufweist, die an den Erweiterungen geformt und so angeordnet sind, daß sie an den Flanschen der abstehenden Rippen (72) anliegen, wenn ein solches Bandmaterial spiralig gewickelt ist.

4. Langgestrecktes Bandmaterial nach Anspruch 1 oder 2, dadurch gekennzeichnet, daß die Rippen (2) mit Ausnahme der Verbindungs- und Eingriffsrippen (2a und 2b) "T"-förmig sind.

5. Langgestrecktes Bandmaterial nach Anspruch 1 oder 2, dadurch gekennzeichnet, daß die abstehenden Rippen (52) relativ geringen Abstand voneinander haben und die Flansche (53) Schlitze bilden, die aus den Kanälen offen sind, welche zwischen den Rippen gebildet werden, und Öffnungen (58) sich durch das Bandmaterial erstrecken und in die Kanäle münden.

6. Langgestrecktes Bandmaterial nach Anspruch 5, dadurch gekennzeichnet, daß in Abständen abstehende Rippen (63) weiter abstehen als die übrigen abstehenden Rippen (62a).

7. Langgestrecktes Bandmaterial nach Anspruch 1, dadurch gekennzeichnet, daß das Bandmaterial an der einen Kante eine nach oben gerichtete mit Widerhaken ausgebildete Verbindungsrippe (72) aufweist und an der anderen Kante eine nach unten geformte mit Widerhaken ausgebildete Verbindungsrippe (72f) und an einem Zwischenteil eine weitere mit Widerhaken ausgebildete Eingriffsrippe (72e), welche Zwischenrippe (72e) einen ersten Teil des Bandmaterials mit einem zweiten Teil des Bandmaterials verbindet, wobei die beiden Teile in der Ebene durch die erwähnte Zwischenrippe versetzt sind, eine Reihe von abstehenden in Abstand voneinander befindlichen Rippen (72) an dem erwähnten ersten Teil vorgesehen ist, und eine Reihe von nach unten geformten Hülsen (78) am zweiten Teil des Bandes für den Eingriff mit den Flanschen der abstehenden Rippen (72), wenn das Bandmaterial spiralig gewickelt wird, um die Hülsen (78) über die Rippen (72) zu bringen.

8. Verfahren zum Formen eines Gegenstandes durch Wickeln eines langgestreckten Bandmaterials nach einem oder mehreren der Ansprüche 1 bis 4 in eine spiralige Form und Vereinigen der Verbindungsmittel durch den Eingriff dieser Mittel miteinander oder Verkleben derselben, um das Bandmaterial in einer spiraligen Form zu halten, wobei die Kanäle zwischen den Rippen mit einem festen Material (49) während des spiraligen Wickelns des Bandmaterials oder nach demselben gefüllt werden.

9. Verfahren zum Formen eines Gegenstandes durch Wickeln eines langgestreckten Bandmaterials nach einem oder mehreren der Ansprüche 1 bis 4 in eine spiralige Form und Verbinden der Verbindungsmittel durch den Eingriff dieser Mittel miteinander oder durch Verkleben, um das Bandmaterial in einer spiraligen Form zu halten, wobei das Bandmaterial auf einen rohrförmigen Gegenstand (17) gewickelt wird, um den Gegenstand zu verstärken.

10. Verfahren zum Formen eines Gegenstandes durch Wickeln eines langgestreckten Bandmaterials nach einem oder mehreren der Ansprüche 1 bis 4 in eine spiralige Form und Verbinden der Verbindungsmittel durch gegenseitigen Eingriff oder gegenseitiges Verkleben, um das Bandmaterial in einer spiraligen Gestalt zu halten, wobei die Verbindungs- und die Eingriffsrippen aneinander dadurch befestigt werden, daß ein Verstärkungsbandmaterial (28) über die Verbindungsrippen gewickelt wird.

11. Verfahren zum Formen eines Gegenstandes durch Wickeln eines langgestreckten Bandmaterials nach den Ansprüchen 2, 3 oder 4 in spiralige Form und Verbinden der erwähnten Verbindungsmittel durch gegenseitigen Eingriff oder Verkleben miteinander, um das Bandmaterial in spiraliger Form zu halten, wobei ein Verstärkungsdraht (39) in die mit Widerhaken ausgebildete Hülse vor oder beim Wickeln des Bandmaterials in spiralige Form gebracht wird.

12. Verfahren zum Formen eines Gegenstandes durch Wickeln eines langgestreckten Bandmaterials nach einem oder mehreren der Ansprüche 1 bis 4 in eine spiralige Form und Verbinden der erwähnten Verbindungsmittel durch gegenseitigen Eingriff oder Verkleben miteinander, um das Bandmaterial in einer spiraligen Form zu halten, wobei ein weiteres Bandmaterial über das erwähnte Bandmaterial gewickelt wird derart, daß die gebildete Spirale in der entgegengesetzten Richtung geformt wird, um das erwähnte Bandmaterial zu verstärken.

**Revendications**

1. Bande allongée pour former des articles par enroulement hélicoïdal de ladite bande avec une série de nervures en saillie (2) espacées les unes des autres suivant la largeur de la bande sur l'un au moins de ses côtés pour former entre elles une série de canaux ouverts (o) disposés côte à côte dans la direction longitudinale et un dispositif d'assemblage (2a, 2b) sur ladite bande formé par une nervure d'assemblage (2a) et une nervure d'engagement complémentaire (2b) espacées l'une de l'autre dans la direction transversale de ladite bande et adaptées à s'engager mutuellement et à être assemblées quand une partie de bord est placée sur au moins l'autre partie de bord de la bande pendant l'enroulement hélicoïdal de la bande, maintenant ainsi ladite bande dans sa configuration en hélice, caractérisée en ce qu'au moins certaines des nervures en saillie comportent chacune un rebord (3) près de sa partie d'extrémité libre pour renforcer la nervure, chacun desdits rebords (3) étant séparé du rebord d'une nervure voisine.

2. Bande allongée selon la revendication 1, dans laquelle ladite nervure d'assemblage est une nervure (4) crantée sur un côté de la bande et ladite nervure d'engagement se trouve sur le même côté de la bande et comporte une partie femelle crantée (5) qui y est formée à partir du côté opposé de ladite bande.

3. Bande allongée selon la revendication 1, dans laquelle ladite bande comporte une partie en saillie latéralement dépassant ladite nervure d'engagement (72e) mais décalée dans le plan d'une distance à peu près égale à la hauteur des nervures en saillie (72) de ladite bande, et comportant une série de parties femelles longitudinales (78) formées sur ce prolongement, espacées et positionnées pour engager les rebords desdites nervures en saillie (72) quand cette band est enroulée en hélice.

4. Bande allongée selon la revendication 1 ou 2, dans laquelle les nervures (2) autres que les nervures d'assemblage et d'engagement (2a et 2b) sont en forme de "T".

5. Bande allongée selon la revendication 1 ou 2, dans laquelle lesdites nervures en saillie (52) sont espacées relativement proches les unes des autres et les rebords (53) forment des fentes débouchant à partir desdits canaux, formé entre les nervures, des ouvertures (58) traversant ladite bande et débouchant dans lesdits canaux.

6. Bande allongée selon la revendication 5, caractérisée par des nervures en saillie (63), faisant davantage saillie que les autres nervures en saillie (62a).

7. Bande allongée selon la revendication 1, dans laquelle ladite bande comporte sur un bord une nervure d'assemblage (72) crantée (72e), ladite nervure l'autre bord une rainure d'assemblage (72f) crantée formée vers le bas et, à une partie intermédiaire, une autre nervure d'engagement crantée (72e), ladite nervure intermédiaire (72e) reliant une première partie de la bande à une seconde partie de la bande, avec les deux parties déplacées dans un plan par ladite nervure intermédiaire, une série de nervures espacées (72) en relief sur ladite première partie et une série de parties femelles (78) formées vers le bas sur la seconde partie de la bande, positionnées pour engager les rebords desdites nervures en saillie (72) quand ladite bande est enroulée en hélice pour positionner lesdites parties femelles (78) sur lesdites nervures (72).

8. Procédé de formation d'un article par enroulement d'une bande allongée comme revendiquée dans l'une quelconque des revendications 1—4, en une forme hélicoïdale et en assemblant ledit dispositif d'assemblage en engageant mutuellement ou en cimentant ledit dispositif pour maintenir la bande dans une configuration hélicoïdale, les canaux entre lesdites nervures étant remplis avec une matière solide (49) pendant ou après l'enroulement hélicoïdal de ladite bande.

9. Procédé de formation d'un article par enroulement d'une bande allongée comme revendiquée dans l'une quelconque des revendications 1—4, en une forme hélicoïdale et en assemblant ledit dispositif d'assemblage par engagement mutuel ou en cimentant ledit dispositif pour maintenir la bande dans une configuration hélicoïdale, dans lequel ladite bande est enroulée sur un article tubulaire (17) pour renforcer ledit article.

10. Procédé de formation d'un article par enroulement d'une bande allongée comme revendiquée dans l'une quelconque des revendications 1—4, en forme hélicoïdale en en assemblant ledit dispositif d'assemblage par engagement mutuel en en cimentant ledit dispositif pour maintenir la bande dans une configuration hélicoïdale, dans lequel lesdites nervures d'assemblage et d'engagement sont fixées ensemble par l'enroulement d'une bande de renforcement (28) au-dessus desdites nervures d'assemblage.

11. Procédé de formation d'un article par enroulement d'une bande allongée comme revendiquée dans la revendication 2, 3 ou 4 en une forme hélicoïdale et en assemblant ledit dispositif d'assemblage par engagement mutuel ou en cimentant ledit dispositif pour maintenir la bande dans une configuration hélicoïdale, dans lequel un fil de renforcement (39) est positionné dans ladite partie femelle crantée avant ou pendant l'enroulement de ladite bande en forme hélicoïdale.

12. Procédé de formation d'un article par enroulement d'une bande allongée comme revendiquée dans l'une quelconque des revendications 1—4 en une forme hélicoïdale et en assemblant ledit dispositif d'assemblage par engagement mutuel pou en cimentant ledit dispositif pour maintenir la bande dans une configuration hélicoïdale, dans lequel une autre bande est enroulée sur ladite bande, l'hélice étant formée dans le sens opposé de manière à renforcer ladite bande.

FIG 1

FIG 2

FIG 3

**FIG 4**

**FIG 5**

2

FIG 6

FIG 7

FIG 8

FIG 9

FIG 10

FIG 11

FIG 12

*FIG 13*